# EUROPÄISCHE PATENTSCHRIFT

(11) **EP 2 772 354 B1**
(45) Veröffentlichungstag und Bekanntmachung des Hinweises auf die Patenterteilung: **05.12.2018**
(21) Anmeldenummer: 13157360.2
(22) Anmeldetag: 01.03.2013
(51) Int. Cl.: B32B 27/30, B32B 27/34, B32B 1/08, F16L 11/04

(54) **Mehrschichtige Kraftstoffrohrleitung**
Multilayer fuel pipe
Conduite de carburant multicouche

(43) Veröffentlichungstag der Anmeldung: 03.09.2014
(73) Patentinhaber: TI Automotive (Fuldabrück) GmbH, 34277 Fuldabrück (DE)
(72) Erfinder: Zimmer, Werner, 34212 Melsungen/Röhrenfurth (DE); Fahrenholz, Frank, 34128 Kassel (DE); Szczepaniak, Andreas, 34253 Lohfelden (DE); Baumann, Matthias, 47199 Duisburg (DE)
(74) Vertreter: von dem Borne, Andreas

(56) Entgegenhaltungen:
- EP-A1- 1 182 345
- US-A1- 2003 124 288
- US-A1- 2009 297 749

## Beschreibung

Die Erfindung betrifft eine mehrschichtige Kraftstoffrohrleitung, wobei die Rohrleitung zumindest fünf Schichten aufweist. Die erfindungsgemäße mehrschichtige Kraftstoffrohrleitung wird insbesondere in Kraftfahrzeugen eingesetzt.

Mehrschichtige Kraftstoffrohrleitungen der eingangs genannten Art sind aus der Praxis und aus dem Stand der Technik in verschiedenen Ausführungsformen bekannt. Die EP 1 182 345 A1 beschreibt beispielsweise eine mehrschichtige Kraftfahrzeugrohrleitung für Kraftstoffe, die sich grundsätzlich bewährt hat. Derartige Kraftstoffrohrleitungen - insbesondere in Kraftfahrzeugen - müssen verschiedene Anforderungen erfüllen. Zunächst müssen die Kraftstoffrohrleitungen beispielsweise im Crashfall eine ausreichende mechanische Widerstandsfähigkeit aufweisen. Fernerhin müssen die Kraftstoffleitungen ausreichend resistent gegenüber chemischen Beanspruchungen durch in den Kraftstoffen enthaltene Komponenten sein. So ist es erwünscht, dass sich die Kraftstoffrohrleitungen durch eine geringe Permeabilität für in dem Kraftstoff enthaltene Alkohole - insbesondere Methanol und/oder Ethanol - auszeichnen. Weiterhin müssen die Kraftstoffrohrleitungen eine hohe Temperaturstabilität aufweisen. Viele der aus der Praxis bekannten Kraftstoffrohrleitungen können aber diese Anforderungen nicht vollständig erfüllen. Deshalb besteht Verbesserungsbedarf.

Der Erfindung liegt das technische Problem zugrunde, eine mehrschichtige Kraftstoffrohrleitung der eingangs genannten Art anzugeben, bei der die vorstehend beschriebenen Nachteile vermieden werden bzw. zumindest minimiert werden.

Zur Lösung dieses technischen Problems lehrt die Erfindung eine mehrschichtige Kraftstoffrohrleitung, wobei die Rohrleitung zumindest fünf Schichten aufweist und zwar mit folgendem Schichtaufbau von innen nach außen:
- eine innerste Schicht aus zumindest einem Polymer aus der Gruppe "Polyamid 9T, Fluorpolymer, Polyphenylensulfid, Polybutylennaphthalat",
- eine erste Trägerschicht aus Polyamid,
- eine Sperrschicht,
- eine zweite Trägerschicht aus Polyamid,
- eine äußere Schicht aus zumindest einem Polymer aus der Gruppe "Polyamid, Polyphenylensulfid, Polyphthalamid",
wobei die Schichtdicke der Sperrschicht geringer ist als die Schichtdicke der zweiten Trägerschicht,
und wobei zwischen der innersten Schicht und der ersten Trägerschicht und/oder zwischen der zweiten Trägerschicht und der äußeren Schicht eine Adhäsivschicht angeordnet ist.

Es liegt im Rahmen der Erfindung, dass die innerste Schicht in Kontakt mit dem durch die Kraftstoffrohrleitung geleiteten Kraftstoff steht.

Nach einer Ausführungsform der Erfindung ist die innerste Schicht elektrisch leitfähig ausgebildet. Dazu werden dem Kunststoff der innersten Schicht an sich bekannte Leitfähigkeitszusätze beigemischt, beispielsweise Leitruß oder Graphitfasern. Gemäß einer Ausführungsvariante besteht die innerste Schicht aus Polyamid 9 T, wobei die innerste Schicht aus diesem Polyamid zweckmäßigerweise leitfähig ausgebildet ist. Nach einer anderen Ausführungsform der Erfindung besteht die innerste Schicht aus zumindest einem Fluorpolymer aus der Gruppe "Ethylen-Tetrafluorethylen (ETFE), EFEP-Fluorpolymer, THV". Bei dem EFEP-Fluorpolymer handelt es sich um ein Copolymer von Ethylen, Tetrafluorethylen und Hexafluorpropylen. Bei THV handelt es sich um ein Terpolymer aus Tetrafluorethylen, Hexafluorethylen und Vinylidenfluorid. Es liegt im Rahmen der Erfindung, dass die innerste Schicht als Barriereschicht, insbesondere gegen Alkohole wie Methanol und/oder Ethanol wirkt. Es liegt weiterhin im Rahmen der Erfindung, dass die innerste Schicht frei von Oligomeren ist. Oligomere sind in den meisten Kraftstoffen löslich und können den Kraftfahrzeugmotor oder andere Kraftfahrzeugkomponenten schädigen. Gemäß einer Ausführungsvariante ist die innerste Schicht verschweißbar ausgebildet.

Vorzugsweise beträgt die Schichtdicke der innersten Schicht 0,1 bis 0,3 mm und bevorzugt 0,15 bis 0,25 mm. Nach einer bevorzugten Ausführungsform beträgt die Schichtdicke der innersten Schicht 0,2 mm bzw. in etwa 0,2 mm.

Empfohlenermaßen besteht die erste Trägerschicht aus Polyamid 6 bzw. im Wesentlichen aus Polyamid 6. Eine Ausführungsvariante der Erfindung ist dadurch gekennzeichnet, dass zwischen der innersten Schicht und der ersten Trägerschicht eine Adhäsivschicht angeordnet ist. Die Adhäsivschicht verbessert bzw. optimiert die Haftung zwischen der innersten Schicht und der ersten Trägerschicht. Zweckmäßigerweise besteht die Adhäsivschicht bzw. besteht die Adhäsivschicht im Wesentlichen aus einem Blend aus Polyamid bzw. Polyamid 6 und dem Kunststoff der innersten Schicht.

Nach besonders bevorzugter Ausführungsform der Erfindung ist die erste Trägerschicht unmittelbar und ohne Zwischenschaltung einer weiteren Schicht mit der Sperrschicht verbunden. Es liegt im Rahmen der Erfindung, dass die Sperrschicht aus Ethylen-Vinylalkohol-Copolymer (EVOH) bzw. im Wesentlichen aus EVOH besteht.

Bevorzugt besteht die zweite Trägerschicht aus Polyamid 6 (PAG) bzw. im Wesentlichen aus Polyamid 6 (PAG). Empfohlenermaßen ist die zweite Trägerschicht unmittelbar und ohne Zwischenschaltung einer weiteren Schicht mit der Sperrschicht verbunden.

Eine besonders bevorzugte Ausführungsform der Erfindung ist dadurch gekennzeichnet, dass das Schichtenaggregat aus der ersten Trägerschicht, der Sperrschicht und der zweiten Trägerschicht eine Dicke von 0,5 bis 0,8 mm und bevorzugt von 0,6 bis 0,7 mm aufweist. Dieses Schichtenaggregat wird nachfolgend auch als Kernaggregat bezeichnet.

Empfohlenermaßen weist die erste Trägerschicht eine Schichtdicke von 0,15 bis 0,35 mm, bevorzugt von 0,2 bis 0,3 mm, auf. Bevorzugt weist die zweite Trägerschicht eine Schichtdicke von 0,15 bis 0,35 mm, bevorzugt von 0,2 bis 0,3 mm auf.

Zweckmäßigerweise beträgt die Schichtdicke der Sperrschicht 0,1 bis 0,2 mm und bevorzugt 0,12 bis 0,18 mm. Erfindungsgemäß ist die Schichtdicke der Sperrschicht geringer als die Schichtdicke der zweiten Trägerschicht. Es liegt im Rahmen der Erfindung, dass die Schichtdicke der Sperrschicht geringer ist als die Schichtdicke der ersten Trägerschicht. Die Sperrschicht, insbesondere die Sperrschicht aus EVOH wirkt vor allem als Sperrschicht bzw. Barriereschicht gegen Alkohole, vor allem gegen Methanol und Ethanol.

Es liegt im Rahmen der Erfindung, dass zwischen der zweiten Trägerschicht und der äußeren Schicht eine Adhäsivschicht angeordnet ist. Wie oben bereits dargelegt, dient eine solche Adhäsivschicht zur Verbesserung bzw. Optimierung der Haftung zwischen der zweiten Trägerschicht und der äußeren Schicht. Zweckmäßigerweise besteht die Adhäsivschicht zwischen der zweiten Trägerschicht und der äußeren Schicht aus einem Blend bzw. im Wesentlichen aus einem Blend aus Polyamid bzw. Polyamid 6 und dem Kunststoffmaterial der äußeren Schicht.

Empfohlenermaßen beträgt die Schichtdicke der äußeren Schicht 0,1 bis 0,3 mm und bevorzugt 0,15 bis 0,25 mm. Eine besonders bevorzugte Ausführungsform ist dadurch gekennzeichnet, dass die Schichtdicke der äußeren Schicht 0,2 mm bzw. in etwa 0,2 mm beträgt. - Nach einer Ausführungsvariante der Erfindung besteht die äußere Schicht aus zumindest einem, insbesondere aus einem Polyamid aus der Gruppe "Polyamid 12, Polyamid 11, Polyamid 1010, Polyamid 1012, Polyamid 1212, Polyamid 610, Polyamid 612".

Es liegt im Rahmen der Erfindung, dass die äußere Schicht verschweißbar ausgebildet ist und insbesondere im Rahmen eines "spin welding-Verfahrens" oder im Rahmen eines "laser welding-Verfahrens" verschweißt werden kann. Fernerhin liegt es im Rahmen der Erfindung, dass die äußere Schicht die mechanische Resistenz bzw. im Wesentlichen die mechanische Resistenz der erfindungsgemäßen mehrschichten Kraftfahrzeugrohrleitung gewährleistet. Nach einer Ausführungsform der Erfindung ist dem Kunststoff der äußeren Schicht zumindest ein Farbstoff zugesetzt. Auf diese Weise kann die äußere Schicht -je nach Bedarf - in unterschiedlichen Farben ausgebildet werden.

Der Erfindung liegt die Erkenntnis zugrunde, dass die erfindungsgemäße mehrschichtige Kraftstoffrohrleitung eine Mehrzahl von Vorteilen gegenüber bislang bekannten Kraftstoffrohrleitungen aufweist. So zeichnet sich die erfindungsgemäße Rohrleitung durch eine ausreichende Resistenz gegenüber in den Kraftstoffen enthaltenen Komponenten aus. Vor allem weist sie eine geringe Permeabilität für Alkohole, insbesondere für Methanol und/oder Ethanol auf. Außerdem zeichnet sich die erfindungsgemäße Kraftstoffrohrleitung durch eine ausgezeichnete mechanische Resistenz aus, insbesondere auch im Crashfall von Kraftfahrzeugen. Auch gegenüber höheren Temperaturen ist die erfindungsgemäße Rohrleitung ausreichend resistent. Hervorzuheben ist vor allem, dass die erfindungsgemäße Rohrleitung mit geringem Aufwand, insbesondere mit geringem Kostenaufwand realisiert werden kann. Diese Vorteile konnte der Fachmann im Vergleich zu den aus der Praxis bekannten Rohrleitungen nicht erwarten.

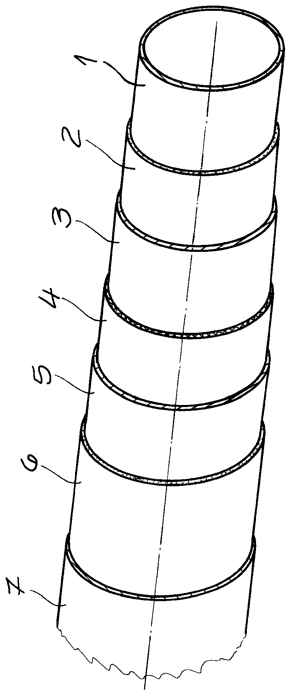

Nachfolgend wird die Erfindung anhand einer lediglich ein Ausführungsbeispiel darstellenden Zeichnung näher erläutert. Die einzige Figur zeigt eine erfindungsgemäße mehrschichtige Kraftfahrzeugrohrleitung.

Die einzige Figur zeigt eine 7-schichtige erfindungsgemäße Kraftstoffrohrleitung. Die innerste Schicht 1 besteht im Ausführungsbeispiel aus Ethylen-Tetrafluorethylen (ETFE). Sie ist elektrisch leitfähig ausgestaltet, beispielsweise durch den Zusatz von Leitruß, Graphitfasern oder dergleichen. Im Ausführungsbeispiel schließt an die innerste Schicht 1 eine erste Adhäsivschicht 2 an. Mit dieser ersten Adhäsivschicht 2 ist eine erste Trägerschicht aus Polyamid 6 (PA 6) verbunden. Nach außen hin ist an die erste Trägerschicht 3 unmittelbar und ohne Zwischenschaltung einer weiteren Schicht eine Sperrschicht 4 aus Ethylen-Vinylalkohol-Copolymer (EVOH) angeschlossen. Mit der Sperrschicht 4 ist ebenfalls unmittelbar und ohne Zwischenschaltung einer weiteren Schicht eine zweite Trägerschicht 5 aus Polyamid 6 (PA 6) verbunden. Im Ausführungsbeispiel schließt nach außen hin an die zweite Trägerschicht 5 eine zweite Adhäsivschicht 6 an. Die zweite Adhäsivschicht 6 ist im Ausführungsbeispiel nach außen hin mit einer äußeren Schicht 7 aus einem Polyamid verbunden. Es handelt sich dabei zweckmäßigerweise um ein Polyamid aus der Gruppe "Polyamid 12, Polyamid 11, Polyamid 1010, Polyamid 1012, Polyamid 1212, Polyamid 610, Polyamid 612". Das Schichtenaggregat bzw. Kernaggregat aus der ersten Trägerschicht 3, der Sperrschicht und der zweiten Trägerschicht 5 ist in Kombination mit den übrigen Merkmalen der Erfindung kritisch bzw. erfindungswesentlich. Die Sperrschicht 4 weist im Übrigen zweckmäßigerweise und im Ausführungsbeispiel eine geringere Schichtdicke auf, als die erste Trägerschicht 3 aus PA 6 und als die zweite Trägerschicht 5 aus PA 6.

## Patentansprüche

1. Mehrschichtige Kraftstoffleitung, wobei die Rohrleitung zumindest fünf Schichten aufweist und zwar mit folgendem Schichtaufbau von innen nach außen:
- eine innerste Schicht (1) aus zumindest einem Polymer aus der Gruppe "Polyamid 9 T, Fluorpolymer, Polyphenylensulfid, Polybutylennaphthalat",
- eine erste Trägerschicht (3) aus Polyamid,
- eine Sperrschicht (4),
- eine zweite Trägerschicht (5) aus Polyamid,
- eine äußere Schicht (7) aus zumindest einem Polymer aus der Gruppe "Polyamid, Polyphenylensulfid, Polyphthalamid",
wobei die Schichtdicke der Sperrschicht (4) geringer ist als die Schichtdicke der zweiten Trägerschicht (5),
und wobei zwischen der innersten Schicht (1) und der ersten Trägerschicht (3) und/oder zwischen der zweiten Trägerschicht (5) und der äußeren Schicht (7) eine Adhäsivschicht angeordnet ist.

2. Kraftstoffrohrleitung nach Anspruch 1, wobei die innerste Schicht (1) elektrisch leitfähig ausgebildet ist.

3. Kraftstoffrohrleitung nach einem der Ansprüche 1 oder 2, wobei die Schichtdicke der innersten Schicht (1) 0,1 bis 0,3 mm beträgt.

4. Kraftstoffrohrleitung nach einem der Ansprüche 1 bis 3, wobei die erste Trägerschicht (3) aus Polyamid 6 (PA 6) bzw. im Wesentlichen aus Polyamid 6 (PA 6) besteht.

5. Kraftstoffrohrleitung nach einem der Ansprüche 1 bis 4, wobei die erste Trägerschicht (3) unmittelbar und ohne Zwischenschaltung einer weiteren Schicht mit der Sperrschicht (4) verbunden ist.

6. Kraftstoffrohrleitung nach einem der Ansprüche 1 bis 5, wobei die Sperrschicht (4) aus Ethylen-Vinylalkohol-Copolymer (EVOH) bzw. im Wesentlichen aus Ethylen-Vinylalkohol-Copolymer (EVOH) besteht.

7. Kraftstoffrohrleitung nach einem der Ansprüche 1 bis 6, wobei die zweite Trägerschicht (5) aus Polyamid 6 (PA 6) bzw. im Wesentlichen aus Polyamid 6 (PA 6) besteht.

8. Kraftstoffrohrleitung nach einem der Ansprüche 1 bis 7, wobei die zweite Trägerschicht (5) unmittelbar und ohne Zwischenschaltung einer weiteren Schicht mit der Sperrschicht (4) verbunden ist.

9. Kraftstoffrohrleitung nach einem der Ansprüche 1 bis 8, wobei das Schichtenaggregat aus der ersten Trägerschicht (3), der Sperrschicht (4) und der zweiten Trägerschicht (5) eine Dicke von 0,5 bis 0,8 mm aufweist.

10. Kraftstoffrohrleitung nach einem der Ansprüche 1 bis 9, wobei die erste Trägerschicht (3) eine Schichtdicke von 0,15 bis 0,35 mm aufweist und/oder wobei die zweite Trägerschicht (5) eine Schichtdicke von 0,15 bis 0,35 mm aufweist.

11. Kraftstoffrohrleitung nach einem der Ansprüche 1 bis 10, wobei die Schichtdicke der Sperrschicht (4) 0,1 bis 0,2 mm beträgt.

12. Kraftstoffrohrleitung nach einem der Ansprüche 1 bis 11, wobei die Schichtdicke der Sperrschicht (4) geringer ist als die Schichtdicke der ersten Trägerschicht (3).

13. Kraftstoffrohrleitung nach einem der Ansprüche 1 bis 12, wobei die Schichtdicke der äußeren Schicht (7) 0,1 bis 0,3 mm beträgt.

14. Kraftstoffrohrleitung nach einem der Ansprüche 1 bis 13, wobei die äußere Schicht (7) aus zumindest einem Polyamid aus der Gruppe "Polyamid 12, Polyamid 11, Polyamid1010, Polyamid 1012, Polyamid 1212, Polyamid 610, Polyamid 612" besteht.

15. Kraftstoffrohrleitung nach einem der Ansprüche 1 bis 14, wobei die innerste Schicht (1) und/oder die äußere Schicht (7) verschweißbar ausgebildet ist.

## Claims

1. Multilayer fuel pipe, wherein the pipe has at least five layers, specifically with the following layer construction from the inside out:
- an innermost layer (1) comprised of at least one polymer from the group "polyamide 9T, fluoropolymer, polyphenylene sulfide, polybutylene naphthalate",
- a first carrier layer (3) comprised of polyamide,
- a barrier layer (4),
- a second carrier layer (5) comprised of polyamide,
- an outer layer (7) comprised of at least one polymer from the group "polyamide, polyphenylene sulfide, polyphthalamide",
wherein the layer thickness of the barrier layer (4) is less than the layer thickness of the second carrier layer (5),
and wherein an adhesive layer is arranged between the innermost layer (1) and the first carrier layer (3) and/or between the second carrier layer (5) and the outer layer (7).

2. The fuel pipe according to claim 1, wherein the innermost layer (1) is electrically conductive in design.

3. The fuel pipe according to one of claims 1 or 2, wherein the layer thickness of the innermost layer (1) measures 0.1 to 0.3 mm.

4. The fuel pipe according to one of claims 1 to 3, wherein the first carrier layer (3) consists of polyamide 6 (PA 6) or essentially of polyamide 6 (PA6).

5. The fuel pipe according to one of claims 1 to 4, wherein the first carrier layer (3) is directly connected with the barrier layer (4) without an additional layer interspersed.

6. The fuel pipe according to one of claims 1 to 5, wherein the barrier layer (4) consists of ethylene-vinyl alcohol copolymer (EVOH) or essentially of ethylene-vinyl alcohol copolymer (EVOH).

7. The fuel pipe according to one of claims 1 to 6, wherein the second carrier layer (5) consists of polyamide 6 (PA 6) or essentially of polyamide 6 (PA6).

8. The fuel pipe according to one of claims 1 to 7, wherein the second carrier layer (5) is directly connected with the barrier layer (4) without an additional layer interspersed.

9. The fuel pipe according to one of claims 1 to 8, wherein the layer aggregate comprised of the first carrier layer (3), the barrier layer (4) and the second carrier layer (5) has a thickness of 0.5 to 0.8 mm.

10. The fuel pipe according to one of claims 1 to 9, wherein the first carrier layer (3) has a layer thickness of 0.15 to 0.35 mm and/or wherein the second carrier layer (5) has a layer thickness of 0.15 to 0.35 mm.

11. The fuel pipe according to one of claims 1 to 10, wherein the layer thickness of the barrier layer (4) measures 0.1 to 0.2 mm.

12. The fuel pipe according to one of claims 1 to 11, wherein the layer thickness of the barrier layer (4) is less than the layer thickness of the first carrier layer (3) .

13. The fuel pipe according to one of claims 1 to 12, wherein the layer thickness of the outer layer (7) measures 0.1 to 0.3 mm.

14. The fuel pipe according to one of claims 1 to 13, wherein the outer layer (7) consists of at least one polyamide from the group "polyamide 12, polyamide 11, polyamide 1010, polyamide 1012, polyamide 1212, polyamide 610, polyamide 612".

15. The fuel pipe according to one of claims 1 to 14, wherein the innermost layer (1) and/or the outer layer (7) is weldable in design.

## Revendications

1. Conduite de carburant multicouche, la conduite comportant au moins cinq couches et à savoir avec la structure de couches suivante de l'intérieur vers l'extérieur :
- une couche la plus profonde (1) d'au moins un polymère du groupe « Polyamide 9T, polymère fluoro-carboné, sulfure de polyphénylène, naphthalate de polybutylène »,
- une première couche porteuse (3) de polyamide,
- une couche isolante (4),
- une deuxième couche porteuse (5) de polyamide,
- une couche extérieure (7) d'au moins un polymère du groupe « polyamide, sulfure de polyphénylène, polyphthalamide »,
l'épaisseur de couche de la couche isolante (4) étant plus faible que l'épaisseur de couche de la deuxième couche porteuse (5),
et une couche adhésive étant disposée entre la couche la plus profonde (1) et la première couche porteuse (3) et/ou entre la deuxième couche porteuse (5) et la couche extérieure (7).

2. Conduite de carburant selon la revendication 1, la couche la plus profonde (1) étant constituée électro-conductrice.

3. Conduite de carburant selon l'une quelconque des revendications 1 ou 2, l'épaisseur de couche de la couche la plus profonde (1) étant de 0,1 à 0,3 mm.

4. Conduite de carburant selon l'une quelconque des revendications 1 à 3, la première couche porteuse (3) étant composée de Polyamide 6 (PA6) ou pour l'essentiel de Polyamide 6 (PA6).

5. Conduite de carburant selon l'une quelconque des revendications 1 à 4, la première couche porteuse (3) étant reliée directement à la couche isolante (4) et sans intercalage d'une autre couche.

6. Conduite de carburant selon l'une quelconque des revendications 1 à 5, la couche isolante (4) étant composée de copolymère d'éthylène-alcool vinylique (EVOH) ou pour l'essentiel de copolymère-d'éthylène-alcool vinylique (EVOH).

7. Conduite de carburant selon l'une quelconque des revendications 1 à 6, la deuxième couche porteuse (5) étant composée de polyamide 6 (PA6) ou pour l'essentiel de Polyamide 6 (PA6).

8. Conduite de carburant selon l'une quelconque des revendications 1 à 7, la deuxième couche porteuse (5) étant directement reliée à la couche isolante (4) et sans intercalage d'une autre couche.

9. Conduite de carburant selon l'une quelconque des revendications 1 à 8, l'ensemble de couches de la première couche porteuse (3), de la couche isolante (4) et de la deuxième couche porteuse (5) comportant une épaisseur de 0,5 à 0,8 mm.

10. Conduite de carburant selon l'une quelconque des revendications 1 à 9, la première couche porteuse (3) comportant une épaisseur de couche de 0,15 à 0,35 mm et/ou la deuxième couche porteuse (5) comportant une épaisseur de couche de 0,15 à 0,35 mm.

11. Conduite de carburant selon l'une quelconque des revendications 1 à 10, l'épaisseur de couche de la couche isolante (4) étant de 0,1 à 0,2 mm.

12. Conduite de carburant selon l'une quelconque des revendications 1 à 11, l'épaisseur de couche de la couche isolante (4) étant plus faible que l'épaisseur de couche de la première couche porteuse (3).

13. Conduite de carburant selon l'une quelconque des revendications 1 à 12, l'épaisseur de couche de la couche extérieure (7) étant de 0,1 à 0,3 mm.

14. Conduite de carburant selon l'une quelconque des revendications 1 à 13, la couche extérieure (7) étant composée au moins d'un polyamide du groupe « Polyamide 12, Polyamide 11, Polyamide 1010, Polyamide 1012, Polyamide 1212, Polyamide 610, Polyamide 612 ».

15. Conduite de carburant selon l'une quelconque des revendications 1 à 14, la couche la plus profonde (1) et/ou la couche extérieure (7) étant constituée soudable.
